# EUROPÄISCHE PATENTSCHRIFT

(11) **EP 2 411 758 B1**
(45) Veröffentlichungstag und Bekanntmachung des Hinweises auf die Patenterteilung: **30.08.2017**
(21) Anmeldenummer: 10710318.6
(22) Anmeldetag: 23.03.2010
(51) Int. Cl.: F42B 15/08, F42C 17/04, G01P 3/66, F41A 21/32

(54) **BESTIMMUNG DER MÜNDUNGSGESCHWINDIGKEIT EINES GESCHOSSES**
DETERMINATION OF THE MUZZLE VELOCITY OF A PROJECTILE
DÉTERMINATION DE LA VITESSE INITIALE D'UN PROJECTILE

(30) Priorität: 24.03.2009 DE 102009014135
(43) Veröffentlichungstag der Anmeldung: 01.02.2012
(73) Patentinhaber: Dynamit Nobel Defence GmbH, 57299 Burbach (DE)
(72) Erfinder: FURCH, Benjamin, 51503 Rösrath (DE); RÜDIGER, Manfred, 53844 Troisdorf (DE)
(74) Vertreter: Scherzberg, Andreas Hans
(86) Internationale Anmeldenummer: PCT/EP2010/053769
(87) Internationale Veröffentlichungsnummer: WO 2010/108917

(56) Entgegenhaltungen:
- EP-A1- 0 319 649
- EP-A1- 0 783 095
- EP-A1- 1 598 631
- DE-A1- 19 756 357
- DE-C1- 3 407 691
- US-A- 4 142 442
- US-A- 6 064 196

## Beschreibung

Die Erfindung betrifft ein Verfahren zur Bestimmung der Mündungsgeschwindigkeit bei Schulterwaffen.

Für ein genaues und präzises Treffen von Munition aus Rohrwaffen ist die genaue Messung der Mündungsgeschwindigkeit (Vo) erforderlich. Die Kenntnis der Mündungsgeschwindigkeit und deren Auswertung verbessert die Treffgenauigkeit der Munition. Eine Vorrichtung zur Messung einer Mündungsgeschwindigkeit eines Geschosses ist aus DE 3407 691 C1 bekannt. Zur genauen Bestimmung des Sprengpunktes, bzw. des Ausstoß-Zeitpunktes bei Submunition, muss der Zünder die Mündungsgeschwindigkeit möglichst exakt kennen.

In den bisher bekannten Verfahren erfolgt die Messung der Mündungsgeschwindigkeit durch eine zusätzliche Vorrichtung die an dem Abschussrohr der Rohrwaffe angebracht ist. Diese besteht aus einem Magnetfeldsensor, wobei im Geschoss ein Permanentmagnet angeordnet ist. Durch die Bewegung des Geschosses und damit des Permanentmagneten im Abschussrohr wird im Magnetfeldsensor ein Strom induziert. Aus zwei nacheinander vorgenommenen Messungen lässt sich die Geschwindigkeit berechnen.

Folgende Nachteile ergeben sich hieraus:
1. Die Information der Mündungsgeschwindigkeit ist zunächst nur in der externen Messvorrichtung am Abschussrohr vorhanden und muss dann auf den Zünder bzw. die Zünderelektronik im Geschoss übertragen werden.
2. Die Übertragung der Mündungsgeschwindigkeit erfolgt vorzugsweise drahtlos, was einen zusätzlichen technischen Aufwand bedeutet.
3. Bei schultergestützten Rohrwaffen (im Folgenden auch Schulterwaffen genannt) verlängert sich durch die äußere Messvorrichtung die Länge und insbesondere das Gewicht der Waffe. Eine Überschreitung des Gewichtlimits wird heute aus ergonomischen Gründen nicht mehr akzeptiert. Eine Überschreitung der Waffenlänge kann die Staufähigkeit im Mannschaftstransportfahrzeugen verhindern.
4. Eine externe Messvorrichtung benötigt eine zusätzliche Spannungsversorgung, die den Wartungsaufwand derartiger Waffen erhöht.
5. Eine externe Messvorrichtung bedeutet einen zusätzlichen logistischen Aufwand.

In der EP 0 359 908 A1 ist eine Vorrichtung zur Einstellung eines Geschosszeitzünders beschrieben, wobei die Mündungsgeschwindigkeit des Geschosses gemessen und die Laufzeit durch den Messwert der Mündungsgeschwindigkeit korrigiert wird. Zur Ermittlung der Mündungsgeschwindigkeit des Geschosses weist dieses einen Magnetfeldsensor und das Geschützrohr einen ersten Magnetfeldgeber auf. Um die Geschossgeschwindigkeit mit relativ geringem apparativen Aufwand sehr genau zu ermitteln, wird vorgeschlagen, dass an dem Geschützrohr, im Folgenden auch Abschussrohr genannt, ein zweiter Magnetfeldgeber angeordnet ist, und dass der Empfangssensor über einen Verstärker mit einem Start-Stopp-Zähler verbunden ist. Gestartet wird der Zähler, wenn das Geschoss an dem zweiten Magnetfeldgeber vorbeifliegt. Gestoppt wird der Zähler, wenn das Geschoss an dem ersten Magnetfeldgeber vorbeifliegt. Der Inhalt des Zählers bestimmt dann die Taktfrequenz, mit der ein voreingestellter Rückwärtszähler ausgezählt wird.

Nachteilig hieran ist, dass im Abschussrohr, bündig zur inneren Oberfläche, Magnetfeldsensoren angeordnet sind. Dies schwächt das Abschussrohr in so erheblichen Maße, dass dieses an den so geschwächten Stellen der Magnetfeldsensoren aufplatzen kann. Speziell für Schulterwaffen, wie zum Beispiel Panzerfäuste, mit dünnwandigen Abschussrohren von nur wenigen Millimetern ist diese Vorrichtung daher nicht zu verwenden.

Der Erfindung liegt die Aufgabe zugrunde, ein Verfahren nach Anspruch 1 und eine Vorrichtung nach Anspruch 5 zur Bestimmung der Mündungsgeschwindigkeit des Geschosses an Schulterwaffen anzugeben, mit dem oder mit der das Abschussrohr nicht geschwächt wird.

Erfindungsgemäß wird diese Aufgabe durch das Verfahren nach Anspruch 1 und/oder durch die Schulterwaffe nach Anspruch 5 gelöst. In erfinderischer Ausgestaltung wird als Geber ein Magnetfeldgeber und insbesondere ein Permanentmagnet verwendet. Permanentmagnete sind kostengünstig und auch leicht an der Stirnseite zu befestigen. Sie müssen eine derartige Stärke haben, dass sie von den Sensoren detektiert werden können. Es kann von Vorteil sein, wenn die Geber, bzw. die Permanentmagnete ringförmig die Stirnseite umgreifen, d.h. das Geschoss fliegt durch den Permanentmagnet hindurch. Selbstverständlich können auch mehrere Permanentmagnete verwendet werden.

Als Sensoren werden bevorzugt Magnetfeldsensoren verwendet. In Abhängigkeit des Gebers können aber auch andere Sensorarten verwendet werden. Zum Beispiel ist es denkbar Ultraschallgeber zu verwenden. In diesem Fall müssen Ultraschallsensoren verwendet werden.

Erfindungsgemäß werden die Sensoren über elektrische Kabel mit der Zünderelektronik des Geschosses verbunden und die Zünderelektronik berechnet die Mündungsgeschwindigkeit des Geschosses und steuert den Zünder entsprechend. Es kann unter Umständen auch von Vorteil sein, wenn die Übertragung an die Zünderelektronik drahtlos erfolgt.

Eine erfindungsgemäße Schulterwaffe und Geschoss mit einer Vorrichtung zur Bestimmung der Mündungsgeschwindigkeit des Geschosses beim Austritt aus dem Abschussrohr, insbesondere zur Durchführung des genannten Verfahrens ist dadurch gekennzeichnet, dass an der Stirnseite des Abschussrohrs ein Geber zur Aussendung von Signalen und im oder am Geschoss zwei im Abstand d voneinander angeordnete Sensoren zur Detektierung der Signale des Gebers angeordnet sind und die Sensoren beim Vorbeifliegen am Geber einen Impuls detektieren und aus der zeitlichen Differenz der von den zwei Sensoren detektierten Impulse die Mündungsgeschwindigkeit des Geschosses bestimmt wird.

Bevorzugt ist der Geber ein Permanentmagnet und die Sensoren sind Magnetfeldsensoren.

In erfinderischer Ausgestaltung ist der erste Sensor im Geschosskopf und der zweite Sensor im hinteren Teil des Geschosses angeordnet. Zur Verbesserung der Messgenauigkeit sollte der Abstand d der Sensoren möglichst groß sein.

In erfinderischer Ausgestaltung ist der zweite Sensor zwischen den ausklappbaren Flügeln und der Treibladung angeordnet, da er sich dort leicht einbauen lässt.

Bevorzugt sind die Sensoren über elektrische Kabel mit der Zünderelektronik des Geschosses verbunden. Wie schon erwähnt, kann die Verbindung auch drahtlos erfolgen.

Erfindungsgemäß erfolgt die Messung der Mündungsgeschwindigkeit durch das Geschoss selbst. Dies wird dadurch erreicht, dass an der Stirnseite des Abschussrohrs ein Geber, insbesondere ein Magnetfeldgeber angeordnet ist und sich auf dem Geschoss zwei im Abstand voneinander angeordnete Sensoren, insbesondere Magnetfeldsensoren befinden, die beim Vorbeifliegen das Feld des Gebers detektieren. Bevorzugt ist der Geber ein Permanentmagnet.

Auf dem Geschoss befinden sich mindestens zwei Sensoren (z. B. Hall-Sensor und/oder Induktionsspule). An der Rohrmündung befindet sich mindestens ein Geber (z.B. Permanentmagnet oder ein Elektromagnet), der in die Struktur der Waffe integriert ist.

Beim Verlassen des Geschosses aus dem Abschussrohr wird im ersten Sensor und im zweiten Sensor jeweils ein Impuls dadurch erzeugt, dass die Sensoren sich dem Geber annähern. Diese beiden Impulse werden direkt an den Zünder bzw. die Zünderelektronik übertragen. Aus der zeitlichen Differenz der beiden Impulse bestimmt der Zünder bzw. die Zünderelektronik die Mündungsgeschwindigkeit, da der Abstand d der beiden Sensoren voneinander bekannt ist.

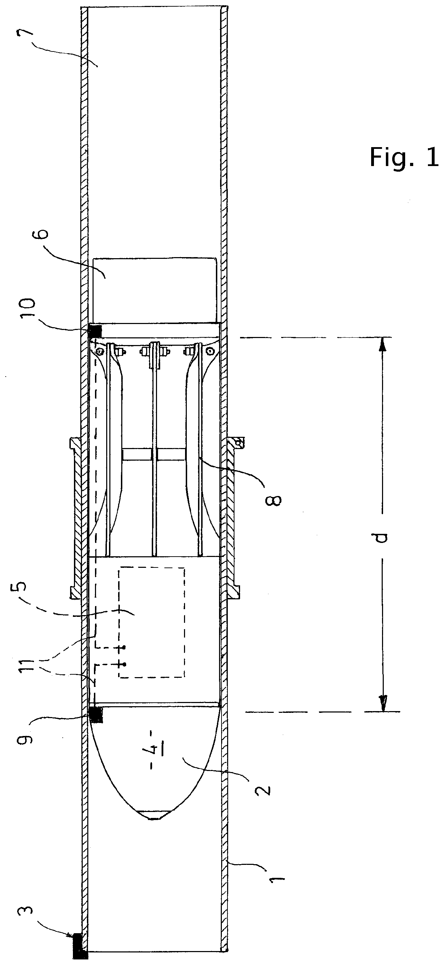

Bevorzugt ist die Verwendung an einer tragbaren Schulterwaffe bestehend aus einem Abschussrohr mit darin befindlicher Treibladung und Geschoss. Am Abschussrohr befindet sich eine Abschussvorrichtung (in der Figur nicht gezeigt) mit für den Transport einklappbaren Handgriffen und einer ebenfalls einklappbaren Schulterstütze.

Nachfolgend wird die Erfindung anhand einer Figur weiter erläutert.

Die einzige Figur zeigt ein Abschussrohr 1 einer tragbaren Schulterwaffe, wie zum Beispiel einer Panzerfaust. An dem äußersten Ende des Abschussrohrs 1, an dem das Geschoss 2 bei Zündung austritt, ist ein Geber 3 angeordnet. Dieser ist zum Beispiel ein Magnetfeldgeber, kann aber auch jeder andere Geber sein, der ein Signal erzeugt, welches von Sensoren 9, 10, die sich im oder am Geschoss 2 befinden, detektiert werden kann. Der Magnetfeldgeber ist bevorzugt ein Permanentmagnet, kann jedoch auch zum Beispiel ein Elektromagnet sein.

Das abzuschießende Geschoss 2 besteht aus einem Geschosskopf 4, einer Zünderelektronik 5 zur Anzündung eines Zünders einer Treibladung 6, einer Gegenmasse 7 und aus ausschwenkbaren Flügeln 8.

Erfindungsgemäß sind im oder am Geschoss 2 zwei Sensoren 9, 10 angeordnet, die das vom Geber 3 ausgesandte Signal detektieren können. Diese Sensoren 9, 10 sind in diesem Fall Magnetfeldsensoren, die das Magnetfeld des Gebers 3, der in diesem Fall ein Magnetfeldgeber ist, detektieren können. Die Sensoren 9, 10 sind über Kabel 11 mit der Zünderelektronik elektrisch verbunden.

In bevorzugter Ausführungsform sind die Sensoren 9, 10 Hall-Sensoren und/oder eine Induktionsspule.

Bei Zündung der Treibladung 6 wird das Geschoss 2 im Abschussrohr 1 beschleunigt. Sobald der erste Sensor 9 in das Feld des Gebers 3 kommt, detektiert der Sensor 9 einen Impuls und leitet diesen an die Zünderelektronik 5 weiter. Dies ist dann der Beginn oder Start der Geschwindigkeitsmessung des Geschosses 2. Wenn der zweite Sensor 10 in das Feld des Gebers 3 kommt, detektiert dieser ebenfalls einen Impuls und leitet diesen an die Zünderelektronik 5 weiter. Da der Abstand d der beiden Sensoren 9, 10 bekannt ist, ergibt sich aus der zeitlichen Differenz der genannten zwei Impulse die Mündungsgeschwindigkeit des Geschosses. Da der Geber an der Stirnseite des Abschussrohrs befestigt ist, wird sein Signal nicht durch das metallische Abschussrohr beeinflusst und es wird genau nur die Mündungsgeschwindigkeit gemessen.

## Patentansprüche

1. Verfahren zur Bestimmung der Mündungsgeschwindigkeit eines Geschosses (2) beim Austritt aus dem Abschussrohr (1) einer Waffe, wobei im oder am Geschoss (2) zwei im Abstand d voneinander angeordnete Sensoren (9, 10) angeordnet werden, der erste Sensor (9) im Geschosskopf (4) und der zweite Sensor (10) im hinteren Teil des Geschosses (2) angeordnet wird, wobei die Waffe eine Schulterwaffe ist und das Geschoss (2) aus einem Geschosskopf (4), einer Zünderelektronik (5) zur Anzündung eines Zünders einer Treibladung (6), einer Gegenmasse (7) und aus ausschwenkbaren Flügeln (8) besteht und an der Stirnseite des Abschussrohrs (1) ein Geber (3) zur Aussendung von Signalen angeordnet wird und die Sensoren (9, 10) zur Detektierung der vom Geber (3) ausgesandten Signale angeordnet werden und diese Sensoren (9, 10) beim Vorbeifliegen am Geber (3) einen Impuls detektieren und aus der zeitlichen Differenz der von den zwei Sensoren (9, 10) detektierten Impulse die Mündungsgeschwindigkeit des Geschosses (2) bestimmt wird und der zweite Sensor (10) zwischen den ausklappbaren Flügeln (8) und der Treibladung (6) angeordnet wird.

2. Verfahren nach Anspruch 1, **dadurch gekennzeichnet, dass** als Geber (3) ein Magnetfeldgeber und insbesondere ein Permanentmagnet verwendet wird.

3. Verfahren nach Anspruch 1 oder 2, **dadurch gekennzeichnet, dass** als Sensoren (9, 10) Magnetfeldsensoren verwendet werden.

4. Verfahren nach einem der Ansprüche 1 bis 3, **dadurch gekennzeichnet, dass** die Sensoren (9, 10) über elektrische Kabel (11) mit der Zünderelektronik (5) des Geschosses (2) verbunden werden und die Zünderelektronik (5) die Mündungsgeschwindigkeit des Geschosses (2) berechnet und den Zünder entsprechend ansteuert.

5. Schulterwaffe mit einem Geschoss und einer Vorrichtung zur Bestimmung der Mündungsgeschwindigkeit des Geschosses (2) beim Austritt aus dem Abschussrohr (1) der Schulterwaffe, wobei im oder am Geschoss (2) zwei im Abstand d voneinander angeordnete Sensoren (9, 10) angeordnet sind, der erste Sensor (9) im Geschosskopf (4) und der zweite Sensor (10) im hinteren Teil des Geschosses (2) angeordnet wird, zur Verwendung für ein Verfahren nach einem der Ansprüche 1 bis 4, wobei an der Stirnseite des Abschussrohrs (1) ein Geber (3) zur Aussendung von Signalen angeordnet ist und die zwei im Abstand d voneinander angeordnete Sensoren (9, 10) zur Detektierung der Signale des Gebers (3) angeordnet sind und die Sensoren (9, 10) beim Vorbeifliegen am Geber (3) einen Impuls detektieren und aus der zeitlichen Differenz der von den zwei Sensoren (9, 10) detektierten Impulse die Mündungsgeschwindigkeit des Geschosses (2) bestimmt wird und das Geschoss (2) aus einem Geschosskopf (4), einer Zünderelektronik (5) zur Anzündung eines Zünders einer Treibladung (6), einer Gegenmasse (7) und aus ausschwenkbaren Flügeln (8) besteht und der zweite Sensor (10) zwischen den ausklappbaren Flügeln (8) und der Treibladung (6) angeordnet wird.

6. Schulterwaffe nach Anspruch 5, **dadurch gekennzeichnet, dass** der Geber (3) ein Permanentmagnet und die Sensoren (9, 10) Magnetfeldsensoren sind.

7. Schulterwaffe nach Anspruch 5 oder 6, **dadurch gekennzeichnet, dass** die Sensoren (9, 10) über elektrische Kabel (11) mit der Zünderelektronik (5) des Geschosses (2) verbunden sind.

## Claims

1. A process for determining the muzzle velocity of a projectile (2) when emerging from the launching barrel (1) of a weapon, wherein two sensors (9, 10), arranged at a spacing d from one another, are arranged in or on the projectile (2), the first sensor (9) is arranged in the projectile head (4), and the second sensor (10) is arranged in the rear part of the projectile (2), wherein the weapon is a shoulder weapon, and the projectile (2) consists of a projectile head (4), detonator electronics (5) for detonating a detonator of a propelling charge (6), a counterbalancing mass (7) and of swing-out wings (8), and a generator (3) for emitting signals is arranged at the front end of the launching barrel (1), and the sensors (9, 10) are arranged for the detection of the signals emitted by the generator (3), and these sensors (9, 10) detect a pulse in the course of flying past the generator (3), and the muzzle velocity of the projectile (2) is determined from the time difference of the pulses detected by the two sensors (9, 10), and the second sensor (10) is arranged between the fold-out wings (8) and the propelling charge (6).

2. A process according to claim 1, **characterised in that** a magnetic-field generator, in particular a permanent magnet, is used as the generator (3).

3. A process according to claim 1 or 2, **characterised in that** magnetic-field sensors are used as the sensors (9, 10).

4. A process according to one of claims 1 to 3, **characterised in that** the sensors (9, 10) are connected to the detonator electronics (5) of the projectile (2) by way of electrical cables (11), and the detonator electronics (5) calculate the muzzle velocity of the projectile (2) and control the detonator accordingly.

5. A shoulder weapon having a projectile and a device for determining the muzzle velocity of the projectile (2) when emerging from the launching barrel (1) of the shoulder weapon, wherein two sensors (9, 10), arranged at a spacing d from one another, are arranged in or on the projectile (2), the first sensor (9) is arranged in the projectile head (4), and the second sensor (10) is arranged in the rear part of the projectile (2), for use for a process according to one of claims 1 to 4, wherein a generator (3) for emitting signals is arranged at the front end of the launching barrel (1), and the two sensors (9, 10), arranged at a spacing d from one another, are arranged for the detection of the signals of the generator (3), and the sensors (9, 10) detect a pulse in the course of flying past the generator (3), and the muzzle velocity of the projectile (2) is determined from the time difference of the pulses detected by the two sensors (9, 10), and the projectile (2) consists of a projectile head (4), detonator electronics (5) for detonating a detonator of a propelling charge (6), a counterbalancing mass (7) and of swing-out wings (8), and the second sensor (10) is arranged between the fold-out wings (8) and the propelling charge (6).

6. A shoulder weapon according to claim 5, **characterised in that** the generator (3) is a permanent magnet, and the sensors (9, 10) are magnetic-field sensors.

7. A shoulder weapon according to claim 5 or 6, **characterised in that** the sensors (9, 10) are connected to the detonator electronics (5) of the projectile (2) by way of electrical cables (11).

## Revendications

1. Procédé de détermination de la vitesse initiale d'un projectile (2) à sa sortie du canon (1) d'une arme, sachant que dans ou sur le projectile (2), deux capteurs (9, 10) sont disposés à la distance d l'un par rapport à l'autre, que le premier capteur (9) est disposé dans la tête de projectile (4) et le deuxième capteur (10) dans la partie postérieure du projectile (2), que l'arme est une arme d'épaule et le projectile (2) se compose d'une tête de projectile (4), d'une électronique d'amorce (5) pour la mise à feu d'une amorce d'une charge propulsive (6), d'une masse d'équilibrage (7) et d'ailettes (8) pouvant être déployées, et que sur la face frontale du canon (1), il est prévu un émetteur (3) destiné à émettre des signaux, et les capteurs (9, 10) sont disposés en vue de la détection des signaux émis par l'émetteur (3), et que ces capteurs (9, 10) détectent une impulsion lors du passage devant l'émetteur (3) et que la vitesse initiale du projectile (2) est déterminée à partir de la différence de temps des impulsions détectées par les deux capteurs (9, 10) et que le deuxième capteur (10) est placé entre les ailettes (8) pouvant se déployer et la charge propulsive (6).

2. Procédé selon la revendication 1, **caractérisé en ce que** l'émetteur (3) utilisé est un émetteur de champ magnétique et en particulier un aimant permanent.

3. Procédé selon la revendication 1 ou 2, **caractérisé en ce que** les capteurs (9, 10) utilisés sont des capteurs de champ magnétique.

4. Procédé selon l'une des revendications 1 à 3, **caractérisé en ce que** les capteurs (9, 10) sont raccordés par des câbles électriques (11) à l'électronique d'amorce (5) du projectile (2) et l'électronique d'amorce (5) calcule la vitesse initiale du projectile (2) et active l'amorce en conséquence.

5. Arme d'épaule comprenant un projectile et un dispositif de détermination de la vitesse initiale du projectile (2) à sa sortie du canon (1) de l'arme d'épaule, sachant que dans ou sur le projectile (2), deux capteurs (9, 10) sont disposés à la distance d l'un par rapport à l'autre, que le premier capteur (9) est disposé dans la tête de projectile (4) et le deuxième capteur (10) dans la partie postérieure du projectile (2), en vue d'une utilisation pour un procédé selon l'une des revendications 1 à 4, sachant que sur la face frontale du canon (1), il est prévu un émetteur (3) destiné à émettre des signaux, et que les deux capteurs (9, 10) placés à la distance d l'un de l'autre sont disposés en vue de la détection des signaux de l'émetteur (3), et que les capteurs (9, 10) détectent une impulsion lors du passage devant l'émetteur (3) et que la vitesse initiale du projectile (2) est déterminée à partir de la différence de temps des impulsions détectées par les deux capteurs (9, 10), et que le projectile (2) se compose d'une tête de projectile (4), d'une électronique d'amorce (5) pour la mise à feu d'une amorce d'une charge propulsive (6), d'une masse d'équilibrage (7) et d'ailettes (8) pouvant être déployées, et que le deuxième capteur (10) est placé entre les ailettes (8) pouvant se déployer et la charge propulsive (6).

6. Arme d'épaule selon la revendication 5, **caractérisée en ce que** l'émetteur (3) est un aimant permanent et les capteurs (9, 10) sont des capteurs de champ magnétique.

7. Arme d'épaule selon la revendication 5 ou 6, **caractérisée en ce que** les capteurs (9, 10) sont raccordés par des câbles électriques (11) à l'électronique d'amorce (5) du projectile (2).
